# EUROPEAN PATENT APPLICATION

(11) **EP 2 660 029 A2**
(43) Date of publication of application: **06.11.2013**
(21) Application number: 11854222.4
(22) Date of filing: 07.12.2011
(51) Int. Cl.: B29C 33/42, B29C 33/18

(54) **VACUUM MOLD HAVING A REVERSE SOLID PATTERN, AND VACUUM-FORMING METHOD USING SAME**

(30) Priority: 29.12.2010 KR 20100137575
(71) Applicant: LG Hausys, Ltd., Seoul 150-721 (KR)
(72) Inventor: KIM, Hyung-Gon, Ulsan 680-778 (KR); LEE, Min-Ho, Busan 612-712 (KR); KIM, Gi-Jung, Busan 613-100 (KR)
(74) Representative: Zacco Denmark A/S
(86) International application number: PCT/KR2011/009425
(87) International publication number: WO 2012/091314

(57) **Abstract**

Provided is a vacuum mold having a reverse solid pattern, which enables an insert sheet to be vacuum-formed, and a solid pattern to be transferred to the insert sheet. The vacuum mold having the reverse solid pattern includes: a lower mold; and a solid pattern disposed on the surface of the lower mold. The insert sheet disposed above the lower mold is adsorbed to the surface of the lower mold by vacuum pressure in order to transfer a pattern of the solid pattern to the insert sheet.

## Description

### [Technical Field]

The present invention relates to a vacuum mold and a vacuum forming method using the same, and more particularly, to a vacuum mold having a reverse three-dimensional pattern, which allows vacuum forming of an insert sheet while transferring a three-dimensional pattern to the insert sheet, and a vacuum forming method using the same.

### [Background Art]

Since a printed pattern formed in an injection-molded product using an insert sheet is realized on a sheet instead of painting an injection-molded product or attaching an adhesive sheet thereto, various patterns can be obtained.

In particular, since volatile organic compounds (VOCs) are rarely generated in an injection-molded product using an insert sheet and a decorative layer is protected by a surface protective layer, the injection-molded product is not severely damaged. For this reason, the injection-molded product using an insert sheet is generally applied to an interior or exterior of vehicles or cases of home appliances.

Meanwhile, the insert sheet has a difficulty in exhibiting three-dimensional decorative effects.

In a general method of forming an insert sheet, vacuum forming is performed in a vacuum mold positioned in a direction of a substrate and acting as a main mold, with a decorative layer placed as an upper surface thereof and providing three-dimensional decorative effects.

However, in this case, the surface of the insert sheet is maintained in a planar shape, and even when texture is provided to the surface of the insert sheet through an embossing process to provide three-dimensional decorative effects, the three-dimensional decorative effects disappear or become unclear by vacuum forming performed at high temperatures, thereby making it difficult to express a desired three-dimensional pattern.

In order to improve the method of forming an insert sheet, a three-dimensional pattern can be provided to a sheet using a UV-curable ink layer on a surface of the sheet, which in turn is subjected to vacuum forming. However, this method can realize only a discontinuous dotted three-dimensional pattern and cannot realize desired three-dimensional decorative effects due to a limit in high temperature forming performance of the UV curable ink.

### [Disclosure]

### [Technical Problem]

An aspect of the present invention is to provide a vacuum mold having a reverse three-dimensional pattern, which allows vacuum formation of an insert sheet while continuously realizing a three-dimensional pattern having an aesthetically pleasing appearance in the insert sheet without using a UV curable ink, and a vacuum forming method using the same.

### [Technical Solution]

In accordance with one aspect, the present invention provides a vacuum mold having a reverse three-dimensional pattern, which includes: a lower mold; and a three-dimensional pattern formed on a surface of the lower mold. An insert sheet disposed on the lower mold is adsorbed to a surface of the lower mold under vacuum such that the three-dimensional pattern is transferred from the lower mold to the insert sheet.

In accordance with another aspect, the present invention provides a vacuum forming method using a vacuum mold having a three-dimensional pattern, which includes: preheating an insert sheet wound in a roll shape; inserting the preheated insert sheet into a vacuum mold comprising a lower mold having a three-dimensional pattern to be transferred to a surface of the insert sheet and an upper mold disposed above the lower mold to be attached onto the lower mold; and performing vacuum forming of the preheated insert by lowering the upper mold to be attached to the lower mold.

### [Advantageous Effects]

According to the present invention, a three-dimensional pattern may be realized to have a three-dimensional and aesthetically pleasing texture by thinly stretching an insert sheet into a desired shape in a vacuum while pressing a lower mold having a three-dimensional pattern and transferring the three-dimensional pattern from the lower mold to a decorative layer of the insert sheet at the same time.

Further, according to the present invention, the vacuum forming method is performed as a continuous process of forming an insert sheet in a vacuum and transferring a three-dimensional pattern to the insert sheet to obtain process simplification, thereby improving yield.

### [Description of Drawings]

Fig. 1 is a schematic sectional view of a vacuum mold having a reverse three-dimensional pattern according to one embodiment of the present invention.
Fig. 2 is a flowchart of a vacuum forming method using a vacuum mold having a reverse three-dimensional pattern according to one embodiment of the present invention.
Figs. 3 and 4 are sectional views showing the vacuum forming method according to the embodiment of the present invention.
Fig. 5 is a sectional view of an insert sheet according to one embodiment of the present invention.
Fig. 6 is a view for explaining a process of forming an injection-molded product, which includes the insert sheet according to the embodiment of the present invention.

### [Best Mode]

The above and other aspects, features, and advantages of the invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the invention to those skilled in the art. The scope of the invention is defined only by the claims. Like components will be denoted by like reference numerals throughout the specification.

Hereinafter, a vacuum forming method using a vacuum mold having a reverse three-dimensional pattern according to one embodiment of the present invention will be described in detail with reference to the accompanying drawings.

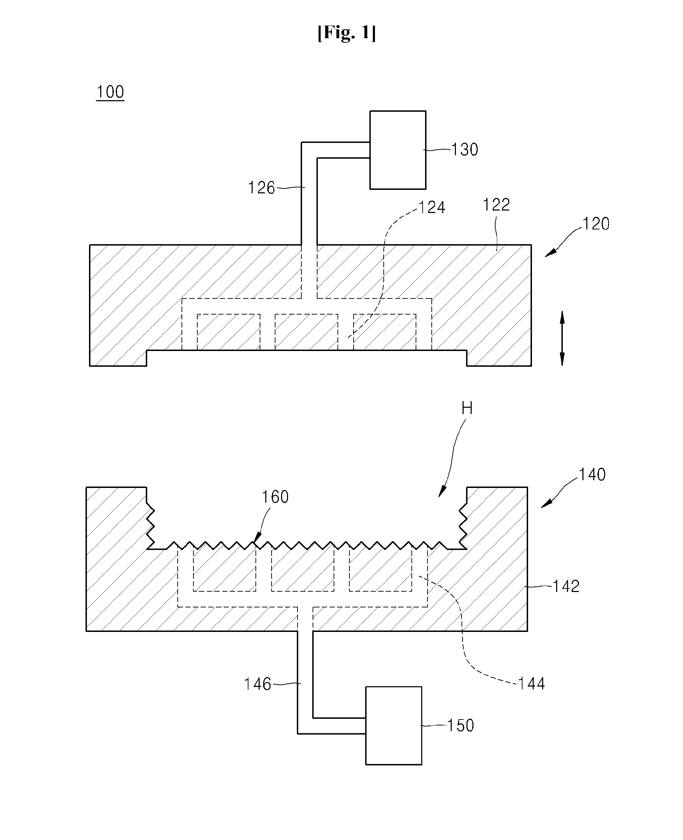

Fig. 1 is a schematic sectional view of a vacuum mold having a reverse three-dimensional pattern according to one embodiment of the present invention.

Referring to Fig. 1, a vacuum mold 100 having a three-dimensional pattern according to one embodiment includes an upper mold 120 and a lower mold 140. The vacuum mold 100 may further include a pneumatic pump 130 and a vacuum pump 150.

The upper mold 120 includes a body 122 constituting a frame, and a plurality of pneumatic holes 124 formed to pass through the body 122.

Upon vacuum forming of an insert sheet (not shown) using the lower mold 140 described below, the upper mold 120 helps the lower mold 140 to be more easily adsorbed to the lower mold 140. If it is possible to form the insert sheet in a vacuum only by vacuum pressure of the upper mold 120, the upper mold 120 can be omitted.

The lower mold 140 is disposed below the upper mold 120 and includes a body 142 and a plurality of vacuum holes 144 formed to pass through the body 142. A three-dimensional pattern 160 to be transferred to a target is formed on a surface of the lower mold 140 facing the upper mold 120.

Here, the upper mold 120 and the lower mold 140 may be designed to reciprocate in a vertical direction.

Although the upper and lower molds 120, 140 are shown as being arranged in the vertical direction in this embodiment, the present invention is not limited thereto, and the upper and lower molds 120, 140 may be arranged horizontally.

The lower mold body 142 has a recess H formed on an upper surface thereof and the three-dimensional pattern 160 may be formed on a bottom surface of the recess H. Alternatively, the three-dimensional pattern 160 may be formed on the bottom surface of the recess H and on a sidewall extending from the bottom surface thereof.

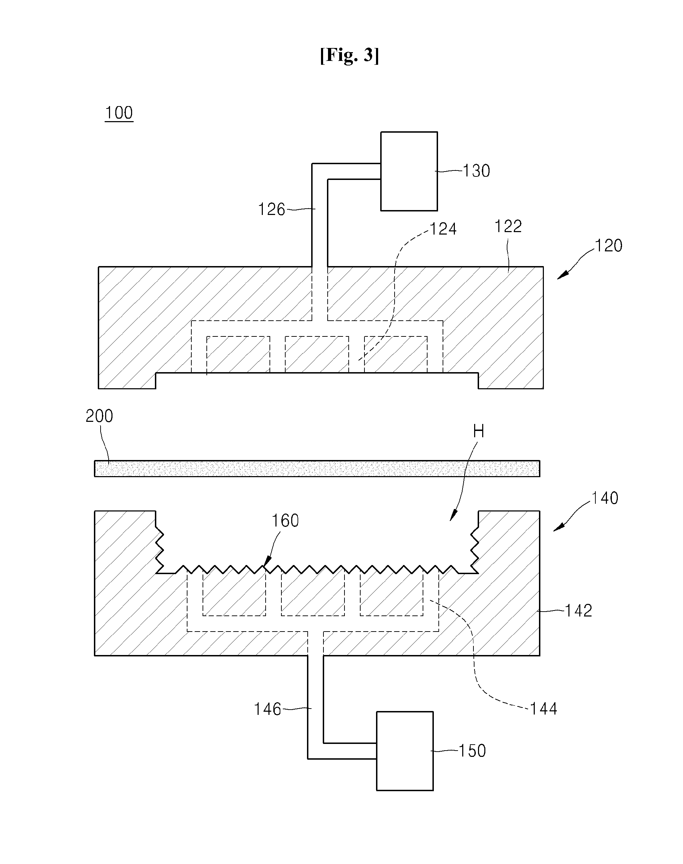

The three-dimensional pattern 160 formed on the surface of the lower mold 140 is transferred to the insert sheet (200 of Fig. 3) described below.

The three-dimensional pattern 160 may be formed by laser-cutting or etching the bottom surface of the recess H of the lower mold body 140 such that the bottom surface of the recess H has a desired pattern.

The upper mold 120 and the lower mold 140 may be formed of a material having excellent wear resistance, impact resistance and heat resistance, specifically, a metallic material, such as carbon steel, alloy steel, stainless steel, etc.

The pneumatic pump 130 is connected to one side of the upper mold 120 to supply compressed air to the upper mold 120. Specifically, the pneumatic pump 130 supplies compressed air to the pneumatic holes 124, which pass through the interior of the upper mold body 122, through a pneumatic pressure supply pipe 126 connected to the pneumatic holes 124.

The vacuum pump 150 is connected to one side of the lower mold 140 to generate a vacuum in the lower mold 140. Specifically, the vacuum pump 150 generates a vacuum in the pneumatic holes 144, which pass through the interior of the lower mold body 142, through a vacuum pipe 146 connected to the vacuum holes 144.

With the configuration as described above, the vacuum mold 100 may allow an insert sheet (not shown) placed on an upper portion of the lower mold 140 to be adsorbed to the surface of the lower mold 140 by a vacuum such that the three-dimensional pattern 160 can be transferred to the insert sheet.

That is, the insert sheet fed into a space between the upper mold 120 and the lower mold 140 is placed on the upper portion of the lower mold 140 having the three-dimensional pattern 160 for vacuum forming. Here, the insert sheet is formed in a desired shape by raising the lower mold 140 while generating a vacuum in the lower mold 140 to force the insert sheet to be adsorbed to the lower mold 140 according to the pattern of the lower mold 140.

In this case, the insert sheet may be adsorbed to the lower mold by generating a vacuum, with the lower mold 140 slightly raised above the bottom surface of the insert sheet. If the lower mold 140 has a complex shape or the lower mold 140 exhibits insufficient forming performance, compressed air from the pneumatic pump 130 connected to one side of the upper mold 120 may be supplied to the insert sheet via the pneumatic pressure supply pipe 126 and the pneumatic holes 124 to provide good attachment between the insert sheet and the lower mold 140, thereby improving vacuum formability of the insert sheet.

Next, a vacuum forming method using a vacuum mold having a reverse three-dimensional pattern according to one embodiment of the present invention will be described.

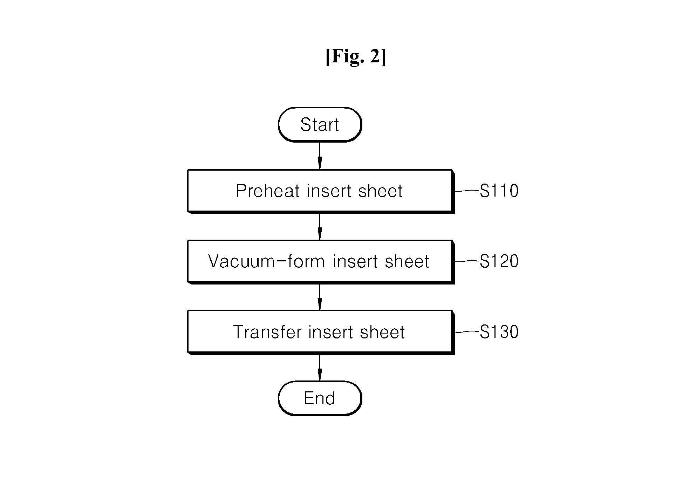

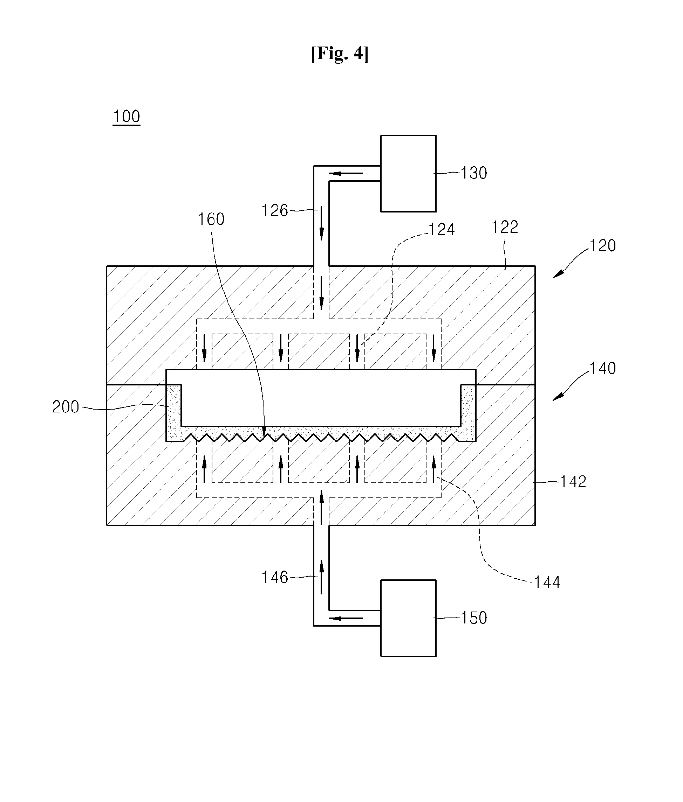

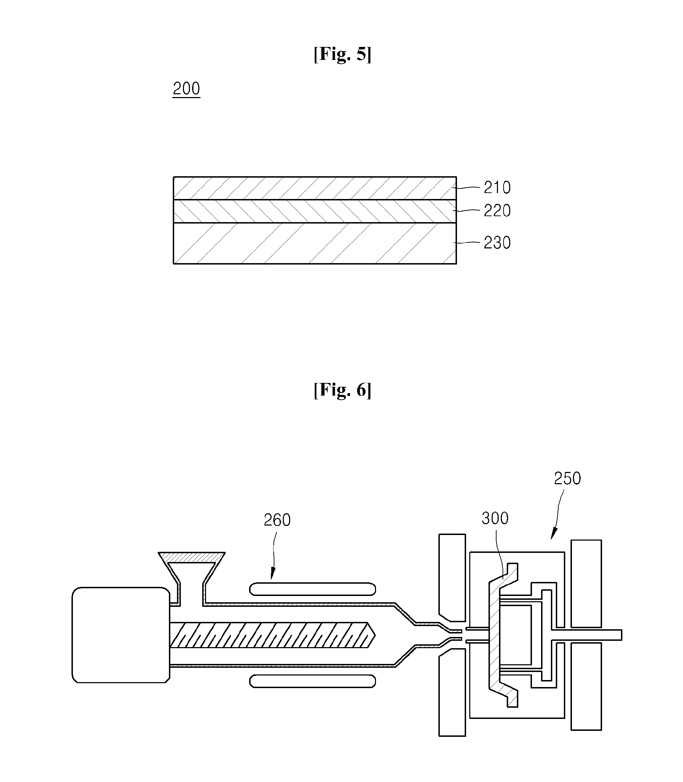

Fig. 2 is a flowchart of a vacuum forming method using a vacuum mold having a reverse three-dimensional pattern according to one embodiment of the present invention, Figs. 3 and 4 are sectional views showing the vacuum forming method according to the embodiment of the present invention, and Fig. 5 is a sectional view of an insert sheet according to one embodiment of the present invention.

Referring to Figs. 2 and 3, the vacuum forming method using a vacuum mold having a reverse three-dimensional pattern according to one embodiment includes an insert sheet preheating operation S110 and an insert sheet vacuum-forming operation S120.

### Insert sheet preheating operation

In the insert sheet preheating operation S 110, an insert sheet 200 wound in a roll shape is preheated to a proper temperature by a heater (not shown).

Next, after the insert sheet preheating operation S110, the insert sheet 200 is introduced into a vacuum mold 100 including a lower mold 140, which has a three-dimensional pattern 160 for transferring a three-dimensional pattern to a surface of the insert sheet 200, and an upper mold 120 disposed above the lower mold 140 to be attached thereto.

Here, the insert sheet preheating operation S110 may be performed as a continuous process, in which a front portion of the insert sheet 200 is introduced into the vacuum mold 100, while a rear portion of the insert sheet 200 which has not been introduced into the vacuum mold 110 is preheated by the heater.

The upper mold 120 includes a body 122 forming a frame and a plurality of pneumatic holes 124 formed to pass through the interior of the body 122.

The lower mold 140 includes a body 142 disposed below the upper mold 120, and a plurality of vacuum holes 144 formed to pass through the interior of the body 142. Here, a three-dimensional pattern 160 is formed on a surface of the lower mold 140 facing the upper mold 120.

The vacuum mold 100 may further include a pneumatic pump 130 and a vacuum pump 150. The pneumatic pump 1230 supplies compressed air to the vacuum mold 100 through a pneumatic pressure supply pipe 126 connected to the pneumatic holes 124 passing through the interior of the upper mold body 122, and the vacuum pump 150 evacuates the vacuum mold 100 through a vacuum pipe 146 connected to the vacuum holes 144 passing through the interior of the lower mold body 122, such that a vacuum is generated in the vacuum mold 100.

As shown in Fig. 6, the insert sheet 200 may include a surface protective layer 210, a decorative layer 220, and a substrate 230.

The surface protective layer 210 is formed of a transparent material to provide a decorative effect and to protect the decorative layer 220 from processing and use environments of the insert sheet 200. The surface protective layer 210 may be formed of an acrylic resin material which is transparent and weatherproof.

The decorative layer 220 is disposed on a lower surface of the surface protective layer 210 and may be formed of at least one of urethane resins, acrylic resins, and vinyl resins. The decorative layer 220 may be formed by gravure printing. Alternatively, the decorative layer 220 may be formed through metal film coating, such as deposition or sputtering.

The substrate 230 has a great influence on mechanical properties of the insert sheet 200 and thus needs to have excellent formability. Thus, the substrate 230 may be formed of a material selected from acrylonitrile butadiene styrene copolymer (ABS), polycarbonate (PC), and polyvinyl chloride (PVC).

In the insert sheet preheating operation S110 as described above, the insert sheet 200 placed between the upper mold 120 and the lower mold 140 may be disposed in a reverse arrangement such that the decorative layer 220 and the surface protective layer 210 face the three-dimensional pattern 160 of the lower mold 140.

### Insert sheet vacuum-forming operation

Referring to Fig. 4, in the insert sheet vacuum-forming operation S120, the upper mold 120 and the lower mold 140 are raised and lowered to contact each other to perform vacuum forming of the preheated insert sheet 200 interposed between the upper mold 120 and the lower mold 140.

Here, the upper mold 120 is designed to have a periphery adjoining the periphery of the lower mold 140 such that the insert sheet 200 and the lower mold 140 are sealed, and an empty cavity (not shown) is defined in the lower mold 140. The insert sheet 200 directly contacts the lower mold 140.

Thus, in the insert sheet vacuum-forming operation S120, the insert sheet 200 can be adsorbed to the lower mold 140 having a three-dimensional pattern 160 by a vacuum and direct contact between the lower mold 140 and the insert sheet 200.

If the lower mold 140 has a complex shape or the lower mold 140 exhibits insufficient forming performance in the course of vacuum-forming the insert sheet 200 adsorbed to the lower mold 140, it is desirable to guarantee formability of the insert sheet 200 through improvement of attachment between the insert sheet 200 and the three-dimensional pattern 160 by supplying compressed air into the cavity.

That is, compressed air from the pneumatic pump 130 connected to the upper mold 120 may be supplied into the vacuum mold 100 through the pneumatic pressure supply pipe 126 and the pneumatic holes 124, and a vacuum is generated in the vacuum mold 100 through the vacuum pipe 146 and the vacuum holes 144 by the vacuum pump 150 connected to the lower mold 140.

Here, when vacuum forming is performed by thinly extending the insert sheet 200 into a desired shape in a vacuum created by the vacuum pump 150 while pressing the lower mold 140 using the compressed air supplied from the pneumatic pump 130, the three-dimensional pattern 160 formed in the lower mold 140 of the vacuum mold 100 can be transferred to the printing layer (220 of Fig. 6) of the preheated insert sheet 200, thereby realizing an aesthetically pleasing three-dimensional pattern.

In this way, in the embodiment of the present invention, since a continuous process of vacuum-forming the insert sheet 200 and transferring the three-dimensional pattern 160 to the insert sheet 200 is performed, the process can be simplified, thereby improving yield.

Although it has been shown and described that the insert sheet 200 is vacuum-formed and the three-dimensional pattern 160 is transferred to the insert sheet 200 at the same time, this process is provided merely as an example and the insert sheet 200 may be subjected to vacuum forming after the three-dimensional pattern 160 is transferred to the insert sheet 200 using pressure and vacuum. Alternately, the three-dimensional pattern 160 may be transferred to the insert sheet 200 using pressure and vacuum after the insert sheet 200 is subjected to vacuum forming.

Next, although not shown in the drawings, the method may further include an operation (not shown) of trimming the vacuum-formed insert sheet (200 of Fig. 4) after the insert sheet vacuum-forming operation S120. In the trimming operation, an unnecessarily formed portion is trimmed and removed from the vacuum-formed insert sheet.

Fig. 6 is a view for explaining a process of forming an injection-molded product, which includes the insert sheet according to the embodiment of the present invention.

Referring to Fig. 6, after the trimming operation, an injection-molded product forming operation (not shown) may be further performed by inserting the vacuum-formed insert sheet (200 of Fig. 4) into an injection-molding mold 250 and injection-molding a molten resin, which is obtained by application of heat and pressure, from an injection-molding machine 260 into the injection-molding mold 250 to laminate the insert sheet on the injection-molded product 300.

Then, since a printed pattern transferred to a decorative layer of the insert sheet neither disappears nor becomes unclear due to heat and pressure during injection-molding, it is possible to realize a desired aesthetically pleasing three-dimensional pattern.

As described above, according to the present invention, an aesthetically pleasing three-dimensional pattern may be realized by thinly stretching an insert sheet into a desired shape in a vacuum while pressing a lower mold having the three-dimensional pattern and transferring the three-dimensional pattern from the lower mold to a decorative layer of the insert sheet at the same time.

Further, according to the present invention, the vacuum forming method is performed as a continuous process of forming an insert sheet in a vacuum and transferring a three-dimensional pattern to the insert sheet to achieve process simplification, thereby improving yield.

Although some embodiments have been described herein, it will be understood by those skilled in the art that these embodiments are provided for illustrative purposes only, and various modifications, changes, alterations and equivalent embodiments can be made without departing from the scope of the present invention. Therefore, the scope and sprit of the present invention should be defined only by the accompanying claims and equivalents thereof.

## Claims

1. A vacuum mold having a reverse three-dimensional pattern, comprising:
a lower mold; and
a three-dimensional pattern formed on a surface of the lower mold,
wherein an insert sheet disposed on the lower mold is adsorbed to a surface of the lower mold in a vacuum such that the three-dimensional pattern is transferred from the lower mold to the insert sheet.

2. The vacuum mold according to claim 1, wherein the vacuum mold comprises:
a vacuum hole formed to pass through an interior of the lower mold; and
a vacuum pump for supplying vacuum pressure to the vacuum hole through a vacuum pipe connected to the vacuum hole.

3. The vacuum mold according to claim 1, further comprising: an upper mold placed above the lower mold.

4. The vacuum mold according to claim 3, wherein the vacuum mold comprises:
a pneumatic hole formed to pass through an interior of the upper mold; and
a pneumatic pump for supplying compressed air to the pneumatic hole through a pneumatic pressure pipe connected to the pneumatic hole.

5. The vacuum mold according to claim 1, wherein the insert sheet comprises a surface protective layer, a decorative layer, and a substrate from the top, the surface protective layer being disposed to face the three-dimensional pattern of the lower mold.

6. The vacuum mold according to claim 1, wherein the lower mold comprises a recess on an upper surface of the lower mold, and the three-dimensional pattern is formed on a bottom surface of the recess.

7. The vacuum mold according to claim 6, wherein the three-dimensional pattern is formed both on the bottom surface of the recess and on a sidewall of the recess.

8. A vacuum forming method using a vacuum mold having a three-dimensional pattern, comprising:
preheating an insert sheet wound in a roll shape;
inserting the preheated insert sheet into a vacuum mold, the vacuum mold comprising a lower mold having a three-dimensional pattern to be transferred to a surface of the insert sheet, and an upper mold disposed above the lower mold to be attached to the lower mold; and
performing vacuum forming of the preheated insert by lowering the upper mold to be attached to the lower mold.

9. The vacuum forming method according to claim 8, wherein the three-dimensional pattern of the lower mold is transferred to the preheated insert sheet by vacuum-forming of the insert sheet.

10. The vacuum forming method according to claim 8, wherein the insert sheet comprises a surface protective layer, a decorative layer, and a substrate from the top, and when the insert sheet is introduced into the vacuum mold, the surface protective layer of the insert sheet is disposed to face the three-dimensional pattern of the lower mold.

11. The vacuum forming method according to claim 8, further comprising: trimming an unnecessary portion from the insert sheet after the vacuum-forming of the insert sheet.

12. The vacuum forming method according to claim 8, wherein the vacuum-forming of the insert sheet comprises supplying compressed air from a pneumatic pump connected to the upper mold into the vacuum mold, and generating a vacuum in the vacuum mold using a vacuum pump connected to the lower mold.
